# EUROPÄISCHE PATENTANMELDUNG

(11) **EP 1 375 763 A1**
(43) Veröffentlichungstag der Anmeldung: **02.01.2004**
(21) Anmeldenummer: 03011676.8
(22) Anmeldetag: 23.05.2003
(51) Int. Cl.: E03F 9/00, B08B 9/04

(54) **Verfahren zum Reinigen von Rohrleitungen und Rohrreinigungsmaschine hierfür**

(30) Priorität: 18.06.2002 DE 10227204
(71) Anmelder: Rothenberger Aktiengesellschaft, 65779 Kelkheim (DE)
(72) Erfinder:
(74) Vertreter: Zapfe, Hans, Dipl.-Ing.

(57) **Zusammenfassung**

Bei einer Rohrreinigungsmaschine, die mit einer drehbaren Trommel (3) und einer damit zusammenwirkenden Schubvorrichtung (8) arbeitet, wird eine mittels eines Fixpunktes (13) in der Trommel (3) befestigte flexible Manipulatorwelle (12) mit einem Kupplungsteil (14) dazu verwendet, nacheinander in Transportbehältern befindliche Federwellen in die Trommel (3) einzuziehen und unter Bildung einer rotierenden Kette von Federwellen an bereits in die Rohrleitung eingebrachte Federwellen anzukuppeln, und umgekehrt, ferner die gekuppelte Kette von Federwellen unter Rückwärtsdrehung wieder zurückzuholen, die Federwellen abzukuppeln und in die Transportbehälter zurück zu geben. Hierdurch werden zusätzliche Trommeln (3) und die Arbeitsgänge zu deren Montage und Demontage eingespart. Die Manipulatorwelle (12), ggf. mit einer taillenförmigen Verjüngung versehen, ist dabei so kurz wie möglich ausgebildet und soll lediglich von dem Fixpunkt (13) und mit ein bis zwei ihrer an der Trommel (3) anliegenden Windungen bis nach außen vor die Schubvorrichtung (8) reichen, um dort als Reinigungswellen dienende Federwellen ankoppeln zu können. Die Transportbehälter können als einfache Drahtkörbe ausgebildet sein.

## Beschreibung

Die Erfindung betrifft ein Verfahren zum Reinigen von Rohrleitungen nach dem Oberbegriff des Patentanspruchs 1 und eine Rohrreinigungsmaschine hierfür nach dem Oberbegriff des Patentanspruchs 5.

Durch die US 3 246 354 ist eine Rohrreinigungsmaschine mit einem zweirädrigen Fahrgestell bekannt, bei der jeder Federwelle eine eigene Trommel zugeordnet ist und in deren Innenraum das eine Ende der Federwelle lösbar durch eine Klemme befestigt ist. Zur Führung der Federwelle befindet sich in der Trommel ein mit der Trommelachse verbundener Rohrkrümmer, dessen abstehendes Ende radial auf den Trommelmantel ausgerichtet ist. Der Federwellen-Vorschub erfolgt durch eine drehbare Schubeinrichtung mit radial beweglichen Transportbacken, die mittels schneidenförmiger Gewindesegmente in die Zwischenräume zwischen den Windungen der Federwelle eingreifen. Die Motorwelle besitzt an beiden Enden je eine Riemenscheibe, die über einen ersten Keilriemen einerseits mit dem Trommelumfang und andererseits über einen zweiten Keilriemen mit einer weiteren Riemenscheibe der Schubeinrichtung in Wirkverbindung stehen.

Das stark unterschiedliche Drehzahlverhältnis von Trommel und Schubeinrichtung ist fest und wird durch die Untersetzungsverhältnisse der beiden Riementriebe bestimmt. Die Drehrichtung des Motors ist umkehrbar. Zum Wechsel der Trommeln muß das Fahrgestell aufgeklappt, der Trommelriemen abgenommen und die Trommel aus ihrer Lagerung ausgebaut werden. Die Trennung von Trommel und Federwelle kann nur durch manuelle Eingriffe in die Trommel erfolgen, was wegen einer vierarmigen Speichenanordnung zwischen Trommel und Trommellager schwierig ist. Diese Trennung ist jedoch erforderlich, um an das Ende eines Federwellenabschnitts den Anfang eines weiteren Federabschnitts anzukuppeln, der mit einer weiteren Trommel gleicher Anschlußmaße bereit gestellt wird, die in umgekehrter Reihenfolge wieder in das Fahrgestell eingebaut wird. Alle Montagevorgänge sind zeitraubend und schwierig, und die Kosten für eine Vielzahl von Trommeln sind hoch. über Maßnahmen und Mittel zum Ankuppeln weiterer Federwellen-Abschnitte schweigt sich die Schrift aus, desgleichen über die Rückführung der Federwellen in die Trommeln. Im Falle eines motorischen Rückzugs der Federwelle in ihre eigene Trommel ist auch das feste Drehzahlverhältnis störend. Einmal erfolgt der Rückzug dann mit der gleichen langsamen Geschwindigkeit wie beim Vorschub zur Reinigung, und zum ändern sind die Schneiden der Transportbacken einem starken, zumindest doppelten Verschleiß durch die Federwellen ausgesetzt.

Für den Transport der Maschine über Treppen sind Gleitkufen vorgesehen, die den beiden Fahrgestell-Rollen vorgelagert sind. Durch die hohen Reibungsbeiwerte ist jedoch für einen Aufwärts-Transport ein hoher Kraftbedarf erforderlich.

Durch die FR-PS 2 138 352 ist eine formschlüssige Federwellenkupplung für Rohrreingungsgeräte bekannt, bei der ein T-förmiger Kupplungsteil diametral in ein Kupplungsteil mit einer komplementären T-förmigen Ausnehmung einschiebbar ist. Die Verriegelung erfolgt automatisch durch einen konzentrischen federbelasteten einrastbaren Stift und kann durch ein Werkzeug mit einer keilförmigen Spitze wieder gelöst werden, die in eine diametrale Bohrung gegen das Ende des Stiftes eingeschoben wird. Eine solche Kupplung ist durch einen hier nicht beschriebenen Transportkopf hindurch führbar und kann auch für den Erfindungsgegenstand verwendet werden.

Durch die DE 31 09 876 A1 und die entsprechende EP 0 061 003 B1 sind trommellose Rohrreinigungsmaschinen in Form von Koffern bekannt, durch die die Federwellen im wesentlichen geradlinig hindurchführbar sind. Hierfür sind jedoch besonders ausgebildete Rotationskupplungen erforderlich, die im Innern des Koffers untergebracht sind. Da die Federwellen mit ihren Reinigungswerkzeugen stets eine Drehbewegung ausführen müssen, durch die ein "Schlagen" der Federwelle provoziert wird, wird zum Schütze der Bedienungsperson und herumstehenden Personals an das hintere Ende des Koffers drehfest ein Schlauch angesetzt, in dem die Federwelle geführt ist. Diese Schläuche ermöglichen jedoch nur die Unterbringung begrenzter Längen von Federwellen und erfordern einen großen Platzbedarf für die Aufstellung der Geräte.

Durch die Firmendruckschrift "ROWO - die Kompakten" sind gleichfalls trommellose Rohrreinigungsmaschinen analog der DE 31 09 876 A1 und der entsprechenden EP 0 061 003 B1 bekannt. In dieser Schrift ist auch die T-förmige Federwellen-Kupplung nach der FR-PS 2 138 352 beschrieben, desgleichen eine Anzahl von Reinigungswerkzeugen, die an das Arbeitsende der Federwellen ansetzbar sind wie Rückholbohrer, Sägezahn-Schneidköpfe, Kreuzblattbohrer, Wurzelschneider, Ketten-Schleuderköpfe mit Spikes, Keulenbohrer, Trichterbohrer, Schaufelbohrer und Hartmetall-Bohrköpfe. Alle diese Reinigungswerkzeuge können auch für den Erfindungsgegenstand verwendet werden.

Durch die US 3 370 599 ist eine Rohrreinigungsmaschine mit einer angetriebenen Haspel bekannt, in der eine Federwelle untergebracht werden kann und mittels welcher die Federwelle in Rotation versetzt werden kann. Durch die Federwelle ist ein Druckschlauch für Spülwasser hindurchgeführt, dessen Ende mit einem Spülkopf versehen ist. Der axiale Vorschub und Rückzug der Federwelle wird durch eine Schubvorrichtung mit reversierbaren Transportrollen bewirkt. Um die Verbindung der Haspelwelle, die mit einer Rotationskupplung für die Zufuhr des Spülwassers versehen ist, mit dem Druckschlauch aufrecht zu erhalten, ist das in der Haspel befindliche Ende der Federwelle fest mit einem radialen Rohrstück verbunden, das zur Rotationskupplung führt. über die Länge der mit dem Spülkopf verbundenen Federwelle ist nichts ausgesagt. Angegeben ist lediglich, daß Teillängen von Federwelle und Druckschlauch durch Kupplungen verbunden werden können. Durch die feste Verbindung mit einer offensichtlich großen Teillänge der Federwelle wird in der Haspel ein erheblicher Teil des Haspelvolumens blockiert, so daß beim eventuellen Einzug zusätzlicher Teillängen hierfür nur ein Teilvolumen zur Verfügung steht. Teillängen sind mit ca. 30 m (100 Fuß) angegeben, und dies führt bei größeren Durchmessern der Federwellen zu einem erheblichen Bedarf an Wickelvolumen. Es kann immer nur eine zusätzliche Teillänge weniger aufgenommen werden, als dies dem Haspelvolumen entspricht.

Durch das DE 19 35 805 U sind verschiedene Arten von Rohrreinigungsmaschinen bekannt. Bei einigen Ausführungsbeispielen handelt es sich um gattungsfremde Durchlaufmaschinen für Federwellen, d.h. ohne Haspel oder Trommel. Für das Ausführungsbeispiel mit Spiralenbehälter (Figur 3) bzw. einer Trommel gelten ähnlich überlegungen wie für die US 3 370 599.

Keine der bekannten Vorrichtungen befaßt sich damit, in einer Trommel oder Haspel nur eine flexible Manipulatorwelle unterzubringen, die von ihrem Befestigungspunkt in der Trommel bis gerade vor die Austrittsöffnung der Schubvorrichtung oder vor das Ende einer angesetzten elastischen Führung, z.B. eines Schlauches, reicht.

Der Erfindung liegt daher die Aufgabe zugrunde, ein Verfahren und eine Rohrreinigungsmaschine hierfür anzugeben, bei denen die gleiche Trommel für die Speicherung und das Aneinandersetzen von möglichst vielen Abschnitten der Reinigungswelle und für deren Rückholung aus der Rohrleitung verwendet werden kann, ohne daß ein umständliches Auswechseln der Trommel(n) erforderlich ist. Die Abschnitte werden in einfachen Transportkörben bereit gestellt und nacheinander mittels derselben Trommel zurückgeholt und wieder in die Transportkörbe zurückgeführt und darin für einen erneuten Einsatz abgelegt.

Die Lösung der gestellten Aufgabe erfolgt bei dem eingangs angegebenen Verfahren zum Reinigen von Rohrleitungen durch die Merkmale nach dem Kennzeichen des Patentanspruchs 1 und bei der eingangs angegebenen Rohrreinigungsmaschine hierfür durch die Merkmale nach dem Kennzeichen des Patentanspruchs 5.

Hierdurch wird die gestellte Aufgabe in vollem Umfange gelöst, d.h. durch die Manipulatorwelle kann die gleiche Trommel für die Zwischen-Speicherung und für das Aneinandersetzen von Abschnitten der Reinigungswelle und für deren Rückholung aus der Rohrleitung verwendet werden. Ein umständliches Auswechseln der Trommel(n) und manuelle Eingriffe in die Trommel zum Lösen und Wieder-Ankuppeln der Federwellen sind nicht mehr erforderlich. Die Abschnitte der Reinigungswelle werden in einfachen Transportbehältern, z.B. Drahtkörben, bereit gestellt und nacheinander mittels derselben Trommel eingeführt und zurückgeholt und wieder in die Transportbehälter zurückgeführt und darin für einen erneuten Einsatz abgelegt.

Wichtig ist dabei die Unterscheidung zwischen Reinigungswellen einerseits und der Manipulatorwelle andererseits. Beide sind letztendlich Federwellen, deren einzelne Windungen einander berühren oder mit Abständen aus Feder-Stahldraht gewendelt sind.

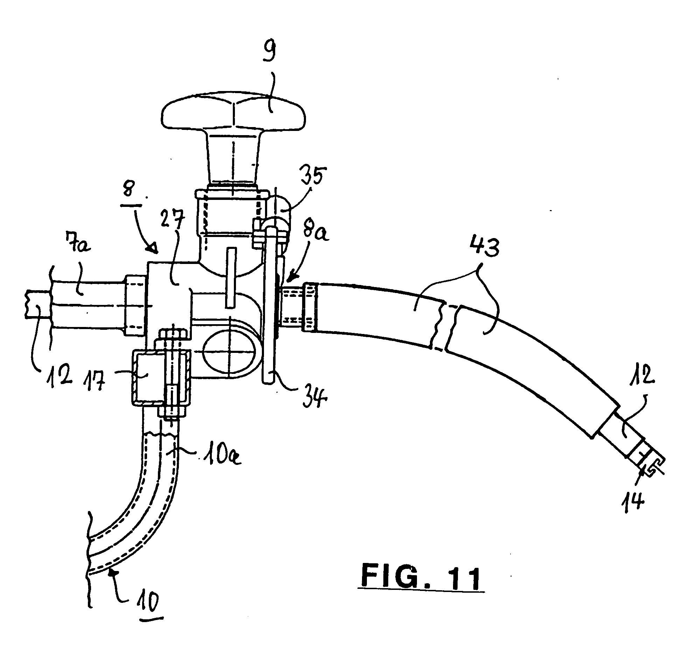

Die Manipulatorwelle ist dabei aber keine Reinigungswelle, sondern hat - wie der Name schon sagt - eine reine Hilfsfunktion für das Ausschieben und Einziehen der zu Reinigungszwecken dienenden Federwellen, schon weil die Manipulatorwelle mit dem allergrößten Teil Ihrer Länge mit minimal einer Windung und maximal drei Windungen in der Trommel verbleibt bzw. so kurz wie möglich gehalten wird. Dies gilt auch für den Fall, daß an die Schubeinrichtung noch eine elastische Führung, z. B., Schlauchstück gemäß Figur 11 angesetzt wird, dessen Querbewegung der Bedienungsperson anzeigt, daß das Ende der Reinigungswelle(n) innerhalb der Rohrleitung an einen Widerstand angestoßen ist, der durch Rotation eines angesetzten Werkzeugs beseitigt werden soll. In einem solchen Fall muß die Länge der Manipulatorwelle bis vor das freie Ende des angesetzten Schlauchstücks reichen.

Dabei kann sich durch eine Fehlbedienung ein Problem ergeben: Sobald die Manipulatorwelle keine Reinigungswelle mehr trägt, kann das Ende der Manipulatorwelle durch die Schubeinrichtung hindurch in die Trommel eingezogen werden, ist also für einen neuen Arbeitsvorgang nicht mehr ohne weiteres erreichbar. Ein Eingriff in die Trommel würde also erforderlich.

Hier schafft nun eine vorteilhafte weitere Ausgestaltung der Erfindung Abhilfe, nämlich verfahrensmäßig dadurch, daß die Manipulatorwelle im Bereich ihres äußeren Endes durch einen Abschnitt mit einer taillenförmigen Querschnittsverjüngung gegenüber ihrem Restquerschnitt außer Eingriff mit der Schubeinrichtung gebracht wird, was in beiden Tranportrichtungen gilt, und vorrichtungsseitig dadurch, daß die Manipulatorwelle im Bereich ihres äußeren Endes mit einem Abschnitt mit einer taillenförmigen Querschnittsverjüngung gegenüber ihrem Restquerschnitt versehen ist, durch den die Manipulatorwelle außer Eingriff mit der Schubeinrichtung bringbar ist. Dieser Abschnitt mit der Querschnittsverjüngung kann dabei in die Manipulatorwelle integriert sein, oder z.B. zur Nachrüstung an die Manipulatorwelle angesetzt werden, wodurch sie gleichfalls ein Teil der Manipulatorwelle wird, und in Verbindung mit der Trommel bliebt.

Es ist auch möglich, einen zweiten solchen Abschnitt am Ende der Federwelle(n) anzuordnen, und zwar zwischen dem Ende der Federwelle(n) und dem jeweils angesetzten Werkzeug, um z.B. bei Verwendung nur einer einzigen Federwelle oder einiger weniger Federwellen, die sämtlich gleichzeitig in der Trommel untergebracht sein können. Auf diese Weise kann das Werkzeug abgenommen und/oder ausgewechselt werden, ohne daß die Gefahr besteht, daß die Federwelle(n) restlos in die Trommel eingezogen werden. Einzelheiten werden am Schluß der Beschreibung sehr ausführlich erläutert.

Weitere Vorteile und Wirkungen ergeben sich aus den übrigen Unteransprüchen und der nachfolgenden Detailbeschreibung, und zwar entweder einzeln oder in Kombination.

Ausführungsbeispiele des Erfindungsgegenstandes und ihre Wirkungsweisen werden nachfolgend anhand der Figuren 1 bis 11 näher erläutert.

Es zeigen:
- Figur 1: einen teilweise Vertikalschnitt durch die Trommel mit der Manipulatorwelle und eine Seitenansicht der Trommelachse mit der Schubeinrichtung,
- Figur 2: den Gegenstand nach Figur 1 mit einem eingezogenen ersten Abschnitt einer Federwelle mit einem angesetzten Reinigungswerkzeug,
- Figur 3: eine Frontalansicht von Schubeinrichtung, Trommel, Antriebsmotor und Keilriemen,
- Figur 4: eine Seitenansicht der kompletten Rohrreinigungsmaschine in einer Blickrichtung gemäß den Figuren 1 und 2,
- Figur 5: einen sternförmig angeordneten Satz von drei Transportrollen,
- Figur 6: einen teilweisen Radialschnitt durch die Schubeinrichtung,
- Figur 7: eine Frontalansicht der Schubeinrichtung,
- Figur 8: eine Seitenansicht eines Rollenbocks der Schubeinrichtung,
- Figur 9: eine Ansicht eines Transportkorbes für die Aufnahme weiterer Abschnitte der Federwelle,
- Figur 10: eine teilweise geschnittene Seitenansicht eines Abschnitts einer Manipulatorwelle mit einer taillenförmigen Querschnittsverjüngung. und
- Figur 11: einen Ausschnitt aus Figur 1 mit einem an die Schubeinrichtung angesetzten elastischen Führungsschlauch.

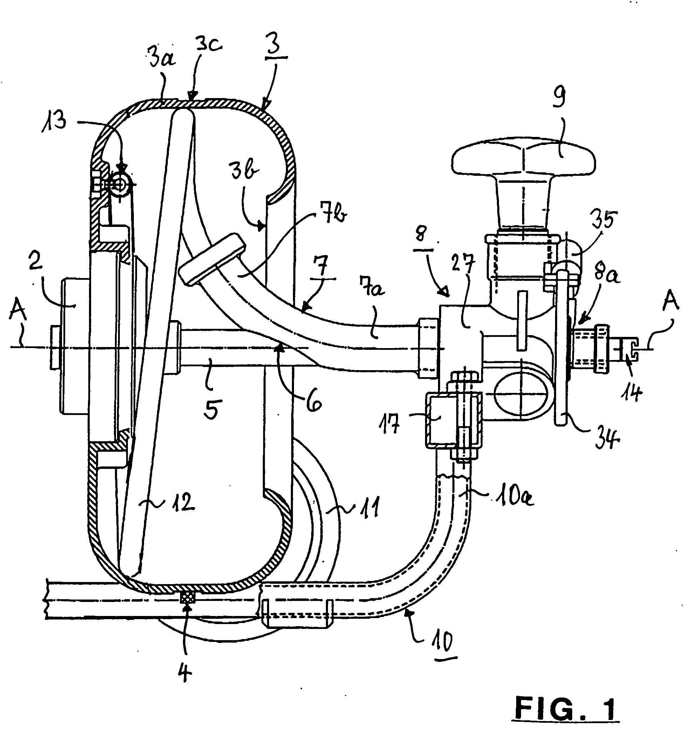

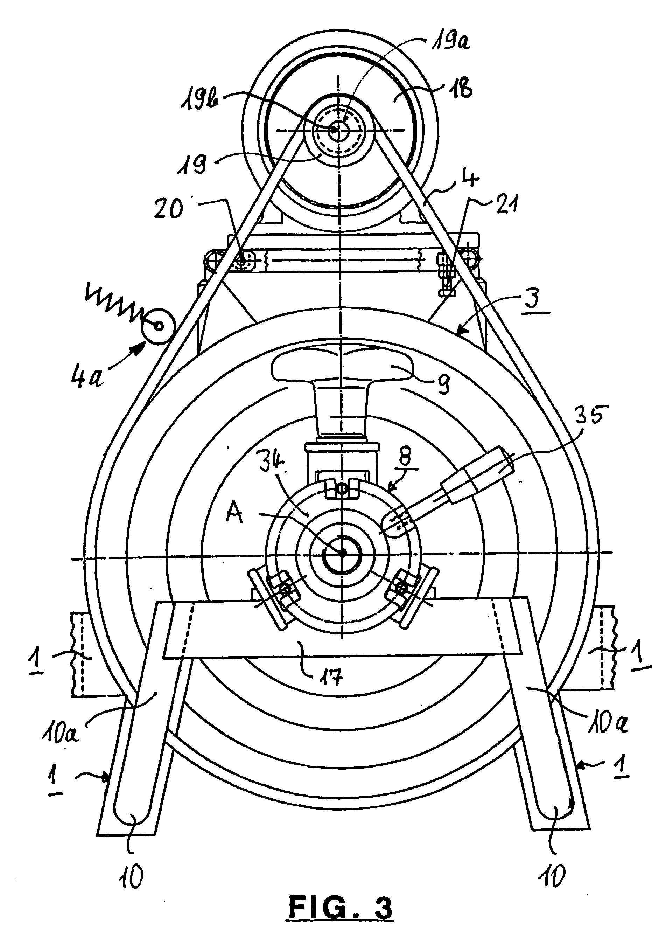

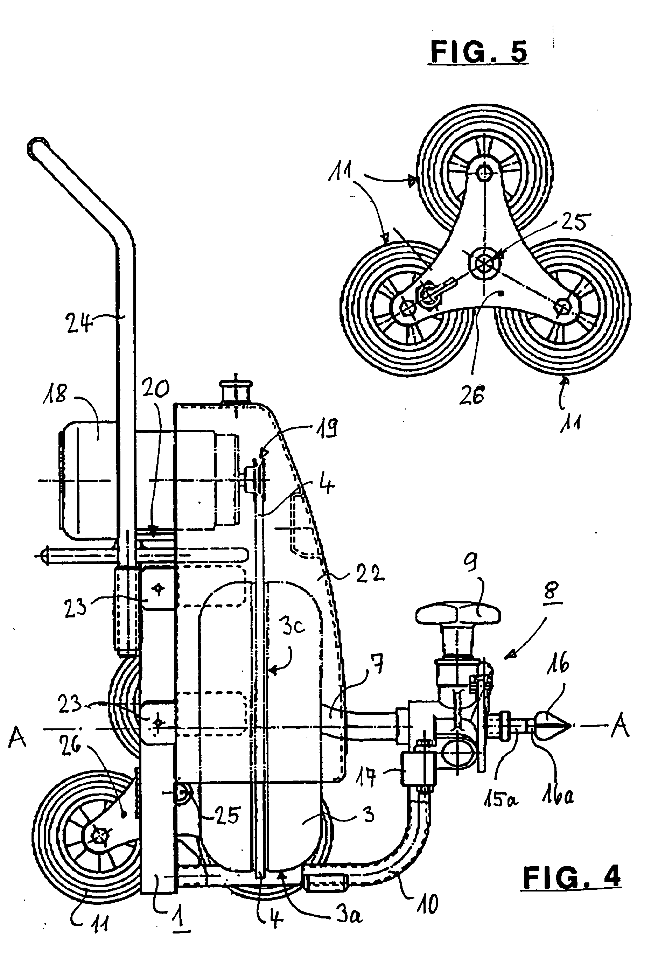

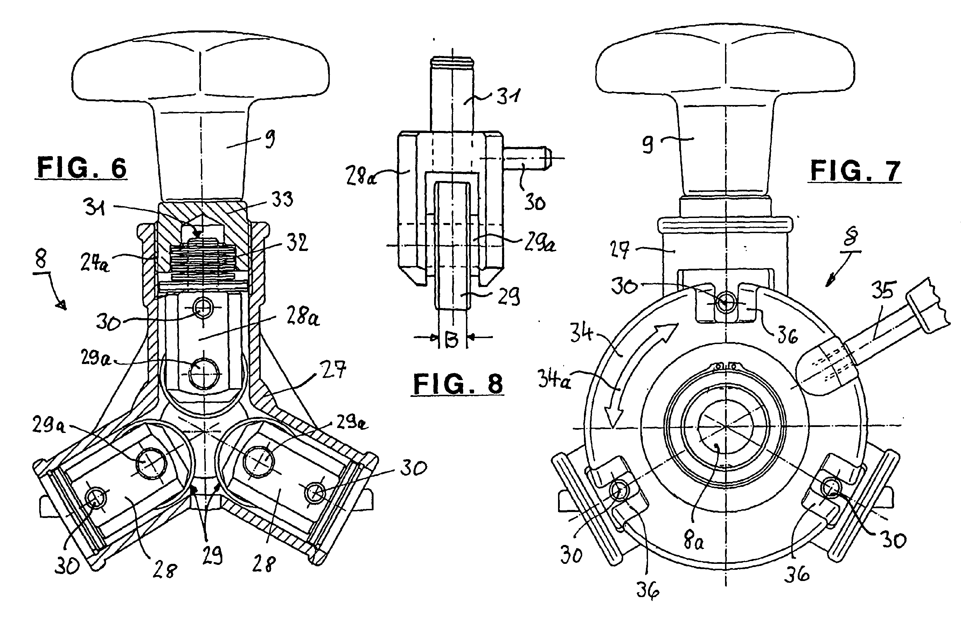

In Figur 1 ist eine Rotationsachse A-A gezeigt, die gleichzeitig die Systemachse ist. An einem Fahrgestell 1 gemäß Figur 4 ist ein Drehlager 2 befestigt, um das eine Trommel 3 mittels eines Antriebsriemens 4 gemäß Figur 3 drehbar ist. Durch die Trommel 3 ist koaxial eine Achse 5 hindurch geführt, die an einer Verbindungsstelle 6 fest mit einem Rohrkrümmer 7 verbunden ist, deren rechter Schenkel 7a eine koaxiale Fortsetzung der Achse 5 darstellt. Der linke Schenkel 7b ist in Richtung auf den Mantelteil 3a der Trommel 3 gekrümmt, die zur Führung des Antriebsriemens 4 eine Umfangsnut 3c besitzt. Die Trommel besitzt eine koaxiale kreisförmige Öffnung 3b, durch die der Rohrkrümmer 7 nach außen geführt und mit einer Schubeinrichtung 8 verbunden ist, die anhand der Figuren 6 bis 8 noch näher beschrieben wird. Die Schubeinrichtung 8 besitzt einen Stellknopf 9 für die Einstellung der Federkraft einer Rolle der Schubeinrichtung 8. Die Schubeinrichtung 8 ist ferner über eine Traverse 17 mit den aufwärts gekrümmten Schenkeln 10a eines Rahmenteils 10 des Fahrgestells 1 verbunden (Figur 4). Eine der Transportrollen 11 ist schematisch angedeutet.

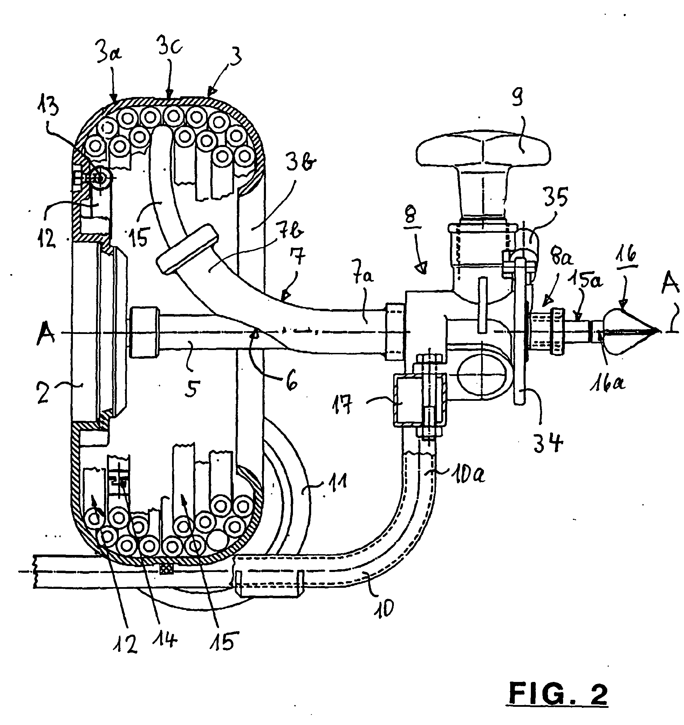

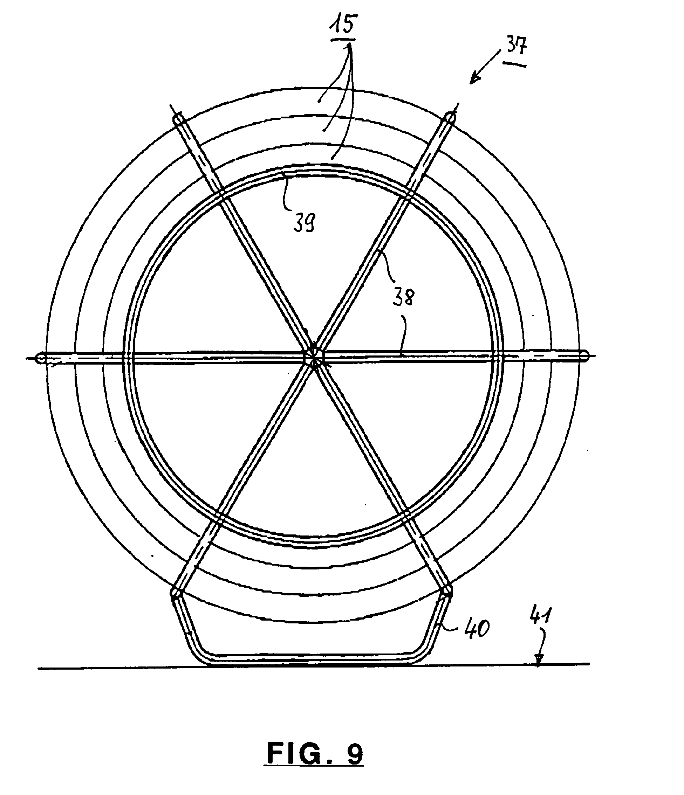

Die Figur 1 zeigt ferner eine flexible Manipulatorwelle 12, die an einem Fixpunkt 13 mit der Trommel 3 verbunden ist und die gleichfalls als Federwelle gleichen Kalibers wie die anzusetzenden Abschnitte der übrigen Federwelle ausgebildet ist. Nur in den Figuren 2 und 9 sind die Windungen der bekannten Federwelle(n) 15 dargestellt. Diese Manipulatorwelle 12 bildet innerhalb der Trommel 3 mindestens eine Leitungs-Windung, die sich an den Mantelteil 3a der Trommel anlegt. Das andere Ende der Manipulatorwelle 12 ist durch den Rohrkrümmer 7 und die Schubeinrichtung 8 und deren Mündung 8a nach außen geführt und besitzt dort ein frei zugängliches Kupplungsteil 14 mit einer diametralen T-förmigen Nut für das Ankuppeln von Abschnitten der zur Rohrreinigung dienenden Federwelle(n) 15 (Figur 2). Der Kupplungsteil 14 der Manipulatorwelle 12 läßt sich noch dahingehend weiter ausgestalten, daß er durch eine Sperrvorrichtung gegen einen Rückzug in die Schubeinrichtung 8 und in die Trommel 3 gesichert ist, wenn in den Kupplungsteil 14 kein Gegen-Kupplungsteil einer Federwelle 15 eingesetzt ist.

Figur 2 zeigt nun den Zustand nach dem Einziehen eines Abschnitts einer Federweile 15, die aus einem Transportkorb nach Figur 9 an das Kupplungsteil 14 angekuppelt wurde. Die Manipulatorwelle 12 und deren Kupplungsteil 14 mit einem komplementären Kupplungsteil der Federwelle 15 befinden sich nunmehr vollständig in der Trommel 3. Das jenseitige Ende der Federwelle 15 ragt gleichfalls frei zugänglich aus der Mündung 8a heraus und trägt dort ein weiteres Kupplungsteil 15a, an das ein Reinigungswerkzeug 16 in Form eines Kreuzblattbohrers angekuppelt wurde. Dieses Reinigungswerkzeug 16 besitzt ein weiteres komplementäres Kupplungsteil 16a. Durch Umkehr der Dreh- und Schubrichtung kann die Federwelle 15 wieder aus der Trommel 3 herausgefördert und unter ständiger Rotation in eine zu reinigende Rohrleitung eingeführt werden werden, bis wieder der Zustand nach Figur 1 erreicht ist.

Dank der Manipulatorwelle 12 läßt sich dieser Vorgang des Einziehens und Ausschiebens von Abschnitten der Federwelle 15 aus Transportkörben oder anderen Behältern mit einer einzigen Trommel 3 mehrfach wiederholen, bis eine ausreichend lange Kette von Abschnitten in die zu reinigende Rohrleitung eingebracht ist, allen voran das jeweilige Reinigungswerkzeug 16. Umgekehrt lassen sich nacheinander alle Abschnitte dieser Kette in die einzige Trommel 3 zurückholen und nacheinander wieder in den Transportkörben oder anderen Behältern ablegen, bis zuletzt auch das Reinigungswerkzeug 16 wieder das Tageslicht erblickt. Zum besseren Verständnis sei unter Hinweis auf Figur 2 ausgeführt, daß bei einer Linksdrehung der Trommel 3 - von rechts gesehen - die Federwelle 15 in den Rohrkümmer 7 eingeschoben wird und hierbei gleichfalls eine Linksdrehung um die Rotationsachse A-A erhält, die den Vorschub und den Reinigungsvorgang bewirkt.

Die Figur 3 zeigt nun folgendes: Die Schubeinrichtung 8 ist auf einer Traverse 17 befestigt, die die Schenkel 10a des Rahmenteils 10 miteinander verbindet. Oberhalb der Trommel 3 befindet sich ein Antriebsmotor 18 mit einer einzigen Riemenscheibe 19, die den Antriebsriemen 4 und damit die Trommel 3 antreibt. Der Antriebsmotor 18 ist so auf einer Wippe 20 gelagert, daß ein Teil seines Gewichts auf die Spannkraft des Keilriemens 4 einwirkt. Dabei wird der Antriebsmotor 18 durch mindestens einen einstellbaren Stoßdämpfer 21 gespannt und abgestützt, so daß auch Schwingungen, die durch Unwuchten entstehen, gedämpft werden. Dieses Zusammenwirken führt zu einer Art einstellbaren Rutschkupplung zur Verhinderung einer überlastung der Manipulatorwelle 12 und der Federwelle(n) 15.

Eine Schlupfregelung zwischen dem Antriebsmotor 18 und der Trommel 3 läßt sich nun auf folgende alternative Art und Weise bewirken: Auf den Antriebsriemen 4 kann nun - entweder von innen oder, wie gezeichnet, von außen - eine federbelastete Spannrolle 4a einwirken, wobei die Federspannung einstellbar ist. Eine weitere Möglichkeit besteht darin, zwischen der Motorwelle 19b und der Riemenscheibe 19 eine einstellbare Rutschkupplung 19b bekannter Bauart anzuordnen.

Die Figur 4 zeigt nun - unter weitgehender Verwendung der bisherigen Bezugszeichen - den weitgehend gekapselten und geschützten Aufbau der Gesamtvorrichtung: Etwa 270 Grad des Umfangs der Trommel 3 und die Riemenscheibe 19 sind durch eine Haube 22 abgedeckt, die durch Laschen 23 mit dem Fahrgestell 1 verbunden ist und zum Zwecke des Wechsels der Federwelle 15 nicht geöffnet werden muß. Das Fahrgestell 1 ist mit einer Handhabe 24 versehen. Der Antriebsmotor 18 ragt nach hinten aus der Haube 22 heraus, so daß die einstellbaren Stoßdämpfer 21 zugänglich sind.

Das Fahrgestell 1 ist ferner mit einer Achse 25 versehen, die an beiden Enden je einen drehbaren sternförmigen Träger 26 mit je einem Satz von drei äquidistant auf den Umfang verteilt angeordneten Transportrollen 11 trägt, was in Figur 5 gezeigt ist. Dadurch ist das Gerät "treppengängig", d.h. beim überfahren von Stufen überrollen die Transportrollen 11 jeweils leichtgängig die Stufenkanten, ohne daß hierbei Gleitreibung auftritt. Das Gerät ist insgesamt deutlich ergonomischer als seine Vorgänger.

Die Figuren 6 bis 8 zeigen in der Zusammenschau folgendes: Die Schubeinrichtung 8, die im Zusammenwirken mit dem von der Trommel 3 und dem Rohrkrümmer 9 erzeugten Axialschub steht, besitzt ein sternförmiges Gehäuse 27 mit drei radialen Bohrungen, deren Achsen jeweils einen Winkel von 120 Grad zwischen sich einschließen. In diesen Bohrungen sind axial verschiebbar und drehbar Rollenböcke 28 und 28a gelagert, die an ihren inneren Enden Rollen 29 mit Rollenachsen 29a tragen, die - hier nicht gezeigt - auf die Federwellen 15 einwirken. Die Rollenböcke tragen an ihren äußeren Enden zu den Rollen 29 achsparallele Zapfen 30, deren Enden aus dem Gehäuse 27 vorstehen.

Der obere Rollenbock 28 ist zusätzlich mit einem radialen Zapfen 31 versehen, der gemäß Figur 6 ein Federpaket 32 trägt. Auf dieses Federpaket 32 wirkt eine Hohlmutter 33 mit einem Außengewinde ein, die fest mit dem Stellknopf 9 verbunden und in ein entsprechendes Innengewinde 27a des Gehäuses 27 einschraubbar ist. Durch diese Anordnung läßt sich nicht nur die Klemmkraft der Rollen 29 verstellen, sondern auch eine Umstellung auf verschiedene Durchmesser der Federwellen 15. Eine geringe Exzentrizität der Federwelle 15 ist hierbei nicht schädlich. Die Breite "B" der Zylinderfläche der Rollen 29 ist hierbei mindestens so groß wie die Steigung der verwendeten Federwellen 15, so daß die Rollen nicht in eventuelle Zwischenräume zwischen den Windungen der Federwelle 15 "einsinken" können.

Im Bereich der Mündung 8a ist auf den Gehäuse 27 eine konzentrische, ringförmige Steuerscheibe 34 gelagert, die mittels eines Handgriffs 35 entsprechend dem Doppelpfeil 34a um die Achse A-A verdrehbar ist. Die Steuerscheibe 34 besitzt auf dem Umfang in äquidistanter Verteilung von ebenfalls 120 Grad drei Ausnehmungen 36, die zum Betrachter hin keilförmig erweitert sind und die Zapfen 30 umschließen. Dadurch lassen sich die Rollenböcken 28 und 28a mit ihren Rollen 29 in ihren Bohrungen aus der achsparallelen Stellung gemäß Figur 6 nach beiden Seiten verdrehen, je nachdem, in welche Richtung die Federwellen 15 transportiert werden sollen.

Figur 9 zeigt einen Transportbehälter 37, der eine Federwelle 15 oder mehrere Federwellenabschnitte aufnehmen kann. Dieser Transportbehälter 37 besteht aus einem Drahtkorb mit 2 x 6 radialen Speichen 38 und zwei Ringen 39, von denen die vorderen die hinteren verdecken. Die Verbindung geschieht über hier nicht sichtbare, achsparallele Traversen, die zwischen den Ringen 39 angeordnet sind und auf die die Federwelle(n) 15 aufgewickelt ist/sind. eine Gruppe der Speichen 38 überragt den zugehörigen Ring 39, und die Speichen sind aus der Zeichenebene nach hinten abgewinkelt und von dort wieder radial einwärts gebogen, um die Federwelle(n) 15 zu halten. Diese können jedoch nach Gebrauch in die Zwischenräume eingefädelt und für einen neuen Einsatz durch Einzug in der Trommel 3 wieder aus diesen herausgenommen werden. Ein Ständer 40 dient zum Abstellen auf einer Unterlage 41.

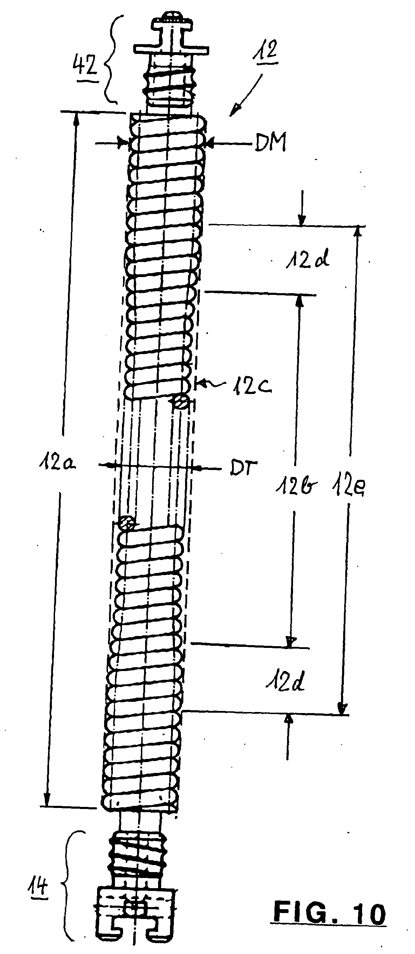

Figur 10 zeigt eine besonders vorteilhafte Weiterbildung des Erfindungsgegenstandes: Die vorstehend beschriebene Manipulatorwelle 12 ist keine Reinigungswelle zum Einführungen in Rohrleitungen, sondern eine reine Manipulatorwelle, die im wesentlichen innerhalb der Trommel verbleibt, also möglichst kurz ausgebildet ist und nur zum Einzug und Ausschub der Reinigungswelle und zur übertragung der Drehbewegung der Trommel 3 bis vor die Schubeinrichtung 8 und - nach Umsteuerung - von da zurück in die Trommel 3 dient. Dies dient dazu, um ein möglichst großes Wickelvolumen für Reinigungswellen in der Trommel zu erhalten und die Trommel zum Wechsel der Reinigungswellen nicht abnehmen zu müssen.

Figur 10 zeigt also einen Abschnitt 12a der Manipulatorwelle 12 mit einer taillenförmigen Querschnittsverjüngung 12b, was durch eine gestrichelte Hüllfläche 12c, eine Zylinderfläche mit dem Durchmesser DM der Manipulatorwelle 12, deutlich gemacht wird. Bei einer Manipulatorwelle 12 mit einem Durchmesser DM von 16 mm reicht es beispielsweise aus, den Taillendurchmesser DT auf 14 mm zu begrenzen. An die Querschnittsverjüngung 12b schließt sich beidseitig je ein Bereich 12d an, in dem der Taillendurchmesser DT kontinuierlich in den Durchmesser DM übergeht, beispielsweise über die Längen von jeweils vier eng aneinanderliegenden Windungen. Die hier nicht dargestellten Hüllflächen sind also Konusflächen. Die Gesamtlänge des Abschnitts 12a beträgt beispielhaft 100 cm, die der Querschnittsverjüngung 12b beispielhaft 50 cm; die Summe von 2 x 12d + 12b = 12e beispielhaft etwa 70 cm bei einem Drahtdurchmesser von 3,5 mm.

Der Abschnitt 12a kann einstückig mit der Manipulatorwelle 12 oder als Manipulatorwelle selbst ausgeführt sein, er kann aber auch - z.B. zum Nachrüsten - über ein männliches Kupplungsteil 42 mit der trommelfesten Manipulatorwelle 12 verbunden sein. Der Abschnitt 12a trägt in jedem Falle an seinem freien Ende ein weibliches Kupplungsteil 14, wie es in den Figuren 1 und 2 dargestellt ist.

Diese Bauweise hat die Wirkung, daß bei Einlauf oder Auslauf der Querschnittsverjüngung 12b die Schubeinrichtung 8 mit ihren Rollen 29 automatisch außer Einwirkung auf die Manipulatorwelle 12 gebracht wird, so daß es weder möglich ist, beim Fehlen einer Reinigungswelle die Manipulatorwelle durch falsche Einstellung der Schubeinrichtung 8 unbeabsichtigt in die Trommel 3 einzuziehen, noch beim Ausschub der Manipulatorwelle 12 eine übermäßige Zugkraft auf den Fixpunkt 13 der Manipulatorwelle 12 innerhalb der Trommel auszuüben.

Zur überwindung dieses "Leerlaufs" ist es lediglich erforderlich, auf den Abschnitt 12a eine Zug- oder Schubkraft auszuüben oder durch Anziehen des Stellknopfes 9 kurzzeitig die Schubeinrichtung 8 mit der Querschnittsverjüngung 12b in Kontakt zu bringen.

Die Ausführungsform nach Figur 11 zeigt einen Ausschnitt aus Figur 1 mit einer an die Schubeinrichtung 8 bzw. deren Mündung 8a angesetzten elastischen Führung 43, die aus einem elastomeren Schlauch besteht, durch den die Manipulatorwelle 12 mit dem Kupplungsteil 14 am Ende hindurch geführt ist. Bevorzugt ist hierbei ein Abschnitt 12a nach Figur 10 entweder eingearbeitet oder angesetzt, und zwar mit solchen Längenverhältnissen, daß die Manipulatorwelle 12 bzw. der Abschnitt 12a zum Stillstand kommt, bevor das Kupplungsteil 14 in der Führung 43 verschwindet. Diese Führung 43 ist zu dem Zweck vorgesehen, daß bei einem hohen Drehmoment am Reinigungswerkzeug innerhalb der Rohrleitung eine Querbewegung der Führung 43 auftritt, die der Bedienungsperson anzeigt, daß der Reinigungsvorgang zu unterbrechen und neu zu starten ist, um eine unzulässige Tordierung von Reinigungs- und Manipulatorwelle zu vermeiden.

Der Kern der Erfindung besteht also in Folgendem: Bei einer Rohrreinigungsmaschine, die mit einer einzigen, fest eingebauten, aber drehbaren Trommel 3 und einer damit zusammenwirkenden Schubvorrichtung 8 arbeitet, wird eine mittels eines Fixpunktes 13 in der Trommel 3 befestigte flexible Manipulatorwelle 12 mit einem Kupplungsteil 14 dazu verwendet, nacheinander in Transportbehältern 37 befindliche Federwellen 15 in die Trommel 3 einzuziehen und unter Bildung einer rotierenden Kette von Federwellen 15 an bereits in die Rohrleitung eingebrachte Federwellen 15 anzukuppeln, und umgekehrt, die gekuppelte Kette von Federwellen 15 unter Rückwärtsdrehung wieder zurückzuholen, die Federwellen 15 abzukuppeln und in die Transportbehälter 37 zurückzugeben. Hierdurch werden zusätzliche Trommeln 3 und die Arbeitsgänge zu deren Montage und Demontage eingespart. Die Transportbehälter können als einfache Drahtkörbe ausgebildet sein.

Es geht also darum, die Manipulatorwelle 12 so kurz wie möglich, aber so lang wie nötig auszubilden, ggf. unter Einbeziehung von taillierten Abschnitten oder dem Anschluß von einem oder zwei separaten taillierten Abschnitten 12a nach Figur 10, daß ein Rückzug des geräteseitigen Kupplungsteils 14 in das Gerät oder seine Ansatzteile nicht möglich ist, ohne unnötig viel Wickelvolumen in der Trommel 3 zu blockieren.

### Bezugszeichenliste:

- A-A: Rotationsachse
- B: Breite
- DM: Außendurchmesser der Manipulatorwelle
- DT: Außerdurchmesser der Querschnittsverjüngung

- 1: Fahrgestell
- 2: Drehlager
- 3: Trommel
- 3a: Mantelteil
- 3b: Öffnung
- 3c: Umfangsnut
- 4: Antriebsriemen
- 4a: Spannrolle
- 5: Achse
- 6: Verbindungsstelle
- 7: Rohrkrümmer
- 7a: Schenkel
- 7b: Schenkel
- 8: Schubeinrichtung
- 8a: Mündung
- 9: Stellknopf
- 10: Rahmenteil
- 10a: Schenkel
- 11: Transportrollen
- 12: Manipulatorwelle
- 12a: Abschnitt
- 12b: Querschnittsverjüngung
- 12c: Hüllfläche
- 12d: Bereich
- 12e: Summe von Teillängen
- 13: Fixpunkt
- 14: Kupplungsteil
- 15: Federwelle
- 15a: Kupplungsteil
- 16: Reinigungswerkzeug
- 16a: Kupplungsteil
- 17: Traverse
- 18: Antriebsmotor
- 19: Riemenscheibe
- 19a: Rutschkupplung,
- 19b: Motorwelle
- 20: Wippe
- 21: Stoßdämpfer
- 22: Haube
- 23: Laschen
- 24: Handhabe
- 25: Achse
- 26: Träger
- 27: Gehäuse
- 27a: Innengewinde
- 28: Rollenböcke
- 28a: Rollenbock
- 29: Rollen
- 29a: Rollenachsen
- 30: Zapfen
- 31: Zapfen
- 32: Federpaket
- 33: Hohlmutter
- 34: Steuerscheibe
- 34a: Doppelpfeil
- 35: Handgriff
- 36: Ausnehmungen
- 37: Transportbehälter
- 38: Speichen
- 39: Ringe
- 40: Ständer
- 41: Unterlage
- 42: Kupplungsteil
- 43: elastische Führung

## Patentansprüche

1. Verfahren zum Reinigen von Rohrleitungen mittels durch trennbare Kupplungen zusammengesetzter Federwellen (15) unter Verwendung einer Rohrreinigungsmaschine, die eine in der Rohrreinigungsmaschine verbleibende, angetriebene Trommel (3) zur Aufnahme jeweils mindestens eines Abschnitts der Federwelle (15) und eine zur Trommel (3) koaxiale Schubeinrichtung (8) mit einer Mündung (8a) besitzt, **dadurch gekennzeichnet, daß**
a) die Trommel (3) mittels einer in der Trommel (3) verankerten flexiblen Manipulatorwelle (12) aus mindestens einem Transportbehälter (37) mit Federwellen (15) geladen und nachgeladen wird, die nacheinander unter Bildung einer Kette von Federwellen (15) in die Rohrleitung eingeführt werden, und daß nach Beendigung des Reinigungsvorgangs die Federwellen (15) mittels der Trommel (3) und der Manipulatorwelle (12) abschnittsweise aus der Rohrleitung in die Trommel (3) zurückgezogen und von dort aus wieder in mindestens einem Transportbehälter (37) abgelegt werden, und daß
b) die Manipulatorwelle (12), ausgehend von ihrem Fixpunkt (13) in der Trommel (3) mit mindestens einer Windung und maximal drei Windungen der Manipulatorwelle (12) in Berührung mit einem Mantelteil (3a) der Trommel (3) gehalten und von hier aus durch einen Rohrkrümmer (7) bis vor die Mündung (8a) der Schubeinrichtung (8) geführt wird.

2. Verfahren nach Anspruch 1, **dadurch gekennzeichnet, daß** zwecks des Ankuppelns mindestens eines Abschnitts der Federwelle (15) das freie Ende der Manipulatorwelle (12) außerhalb der Trommel (3) und der Mündung (8a) der Schubeinrichtung (8) gehalten wird.

3. Verfahren nach mindestens einem der Ansprüche 1 und 2, **dadurch gekennzeichnet, daß** die Manipulatorwelle (12) im Bereich ihres äußeren Endes durch einen Abschnitt (12a) mit einer taillenförmigen Querschnittsverjüngung (12b) gegenüber ihrem Restquerschnitt außer Eingriff mit der Schubeinrichtung (8) gebracht wird.

4. Verfahren nach Anspruch 1, **dadurch gekennzeichnet, daß** das von der Trommel (3) auf die Manipulatorwelle (12) ausgeübte Drehmoment durch eine Schlupfregelung zwischen einem Antriebsmotor (18) und der Trommel (3) begrenzt wird.

5. Rohrreinigungsmaschine zum Reinigen von Rohrleitungen mittels durch trennbare Kupplungen zusammengesetzter Federwellen (15) wobei die Rohrreinigungsmaschine eine in der Rohrreinigungsmaschine verbleibende, antreibbare Trommel (3) zur Aufnahme jeweils mindestens eines Abschnitts der Federwelle (15) und eine zur Trommel (3) koaxiale Schubeinrichtung (8) mit einer Mündung (8a) besitzt, **dadurch gekennzeichnet, daß**
a) die Trommel (3) eine in der Trommel (3) verankerte flexible Manipulatorwelle (12) aufweist, deren freies Ende ein Kupplungsteil (14) aufweist, das zum Ankuppeln von Federwellen (15) aus der Mündung (8a) der Schubeinrichtung (8) herausschiebbar ist, und daß
b) die Manipulatorwelle (12), ausgehend von ihrem Fixpunkt (13) in der Trommel (3) mit mindestens einer Windung und maximal drei Windungen der Manipulatorwelle (12) in Berührung mit einem Mantelteil (3a) der Trommel (3) gehalten und von hier aus durch einen Rohrkrümmer (7) bis vor die Mündung (8a) der Schubeinrichtung (8) geführt ist.

6. Vorrichtung nach Anspruch 5, **dadurch gekennzeichnet, daß** die Manipulatorwelle (12) im Bereich ihres äußeren Endes mit einem Abschnitt (12a) mit einer taillenförmigen Querschnittsverjüngung (12b) gegenüber ihrem Restquerschnitt versehen ist, durch den die Manipulatorwelle (12) außer Eingriff mit der Schubeinrichtung (8) bringbar ist.

7. Vorrichtung nach Anspruch 6, **dadurch gekennzeichnet, daß** die taillenförmige Querschnittsverjüngung (12b) beidendig durch Windungen mit kontinuierlicher Durchmesservergrößerung in den Querschnitt der restlichen Manipulatorwelle (12) übergeht.

8. Rohrreinigungsmaschine nach mindestens einem der Ansprüche 5 bis 7, **dadurch gekennzeichnet, daß** die Schubeinrichtung (8) mit auf dem Umfang ihrer Achse verteilten Rollen (29) versehen ist, deren Achsen relativ zur Achse der Schubeinrichtung (8) zwecks Umschaltung von Vorschub auf Rückzug der Federwelle (15) gleichsinnig verstellbar sind.

9. Rohrreinigungsmaschine nach Anspruch 8, **dadurch gekennzeichnet, daß** die Rollen (29) Zylinderflächen besitzen, deren Breite ("B") mindestens so groß ist, wie die Steigung der Windungen der vorgesehenen Federwelle (15).

10. Rohrreinigungsmaschine nach Anspruch 8, **dadurch gekennzeichnet, daß** mindestens eine der Rollen (29) gegenüber den übrigen Rollen (29) im Abstand verstellbar ist.

11. Rohrreinigungsmaschine nach Anspruch 10, **dadurch gekennzeichnet, daß** mindestens die im Abstand verstellbare Rolle (29) durch ein Federpaket (32) belastet ist.

12. Rohrreinigungsmaschine nach Anspruch 11, **dadurch gekennzeichnet, daß** die Vorspannung des Federpakets (32) durch eine Stellvorrichtung (9) veränderbar ist.

13. Rohrreinigungsmaschine nach Anspruch 8, **dadurch gekennzeichnet, daß** die Rollen (29) in Rollenböcken (28) gelagert sind, die in radialen Bohrungen eines Gehäuses (27) längsverschiebbar und drehbar sind.

14. Rohrreinigungsmaschine nach Anspruch 13, **dadurch gekennzeichnet, daß** die Rollenböcke (28) mit zur ihrer Drehachse senkrecht stehenden Zapfen (30) versehen sind, die in Ausnehmungen (36) einer drehbaren Steuerscheibe (34) eingreifen, derart, daß die Rollenböcke (28) durch Verdrehen der Steuerscheibe (34) gemeinsam und gleichsinnig verdrehbar sind.

15. Rohrreinigungsmaschine nach Anspruch 5, **dadurch gekennzeichnet, daß** oberhalb der Trommel (3) ein Antriebsmotor (18) mit einer Riemenscheibe (19) angeordnet ist, die über einen Antriebsriemen (4) auf die Trommel (3) einwirkt, und daß der Abstand der Riemenscheibe (19) von der Trommel (3) zwecks Einstellung der Riemenspannung veränderbar ist.

16. Rohrreinigungsmaschine nach Anspruch 15, **dadurch gekennzeichnet, daß** durch Veränderung der Riemenspannung eine Drehmomentenbegrenzung der Trommel (3) herbeiführbar ist.

17. Rohrreinigungsmaschine nach Anspruch 15, **dadurch gekennzeichnet, daß** der Antriebsmotor (18) derart auf einer Wippe (20) angeordnet ist, daß mindestens ein Teil des Motorgewichts zur Riemenspannung ausnutzbar ist.

18. Rohrreinigungsmaschine nach Anspruch 17, **dadurch gekennzeichnet, daß** die Wippe (20) mit mindestens einem einstellbaren Stoßdämpfer (21) versehen ist.

19. Rohrreinigungsmaschine nach Anspruch 5, **dadurch gekennzeichnet, daß** die Rohrreinigungsmaschine ein Fahrgestell (1) besitzt, an dem beidseitig je ein drehbarer Träger (26) mit mindestens drei Transportrollen (11) angeordnet ist.

20. Rohrreinigungsmaschine nach Anspruch 5, **dadurch gekennzeichnet, daß** der Antriebsmotor (18) eine Riemenscheibe (19) besitzt, die über eine einstellbare Rutschkupplung (19a) mit der Motorwelle (19b) verbunden ist.
